# FASCICULE DE BREVET EUROPEEN

(11) **EP 1 833 900 B1**
(45) Date de publication et mention de la délivrance du brevet: **28.07.2010**
(21) Numéro de dépôt: 05826544.8
(22) Date de dépôt: 16.12.2005
(51) Int. Cl.: C08K 5/07, C08L 27/06

(54) **INGREDIENT DE STABILISATION DE POLYMERES HALOGENES COMPRENANT UN COMPOSE BETA-DICARBONYLE**
STABILISIERUNGSBESTANDTEIL FÜR HALOGENIERTE POLYMERE, ENTHALTEND EINE BETA-DICARBONYLVERBINDUNG
HALOGENATED POLYMER STABILISING INGREDIENT CONTAINING A BETA-DICARBONYL COMPOUND

(30) Priorité: 20.12.2004 FR 0413577
(43) Date de publication de la demande: 19.09.2007
(73) Titulaire: RHODIA CHIMIE, 92512 Boulogne Billancourt Cedex (FR)
(72) Inventeur: BILLEBAUD, Valerie, F-92600 Asnieres-sur-seine (FR); LEGROS, Valérie, F-77270 Velleparisis (FR); PIERRE, Sylvie, F-94300 Vincennes (FR); ZANETTO, Jean-Emile, F-75009 Paris (FR)
(74) Mandataire: Boittiaux, Vincent
(86) Numéro de dépôt international: PCT/FR2005/003167
(87) Numéro de publication internationale: WO 2006/067314

(56) Documents cités:
- EP-A- 0 697 390
- EP-A- 1 229 073

## Description

La présente invention a pour objet un nouvel ingrédient de stabilisation de polymères halogénés comprenant au moins un composé beta-dicarbonylé, une composition d'additifs pour polymères halogénés comprenant l'ingrédient, et une composition stabilisée à base d'un polymère halogéné. L'invention procure des améliorations en matière de stabilisation des polymères halogénés. L'invention peut en particulier être appliquée à la stabilisation du polychlorure de vinyle.

Les polymères halogénés, en particulier les polymères halogénés thermoplastiques, par exemple le polychlorure de vinyle, sont des polymères d'utilisation répandue dans l'industrie. Pour de nombreuses applications, Il est nécessaire d'adjoindre à ces polymères des additifs, notamment des stabilisants.

Parmi les stabilisants, on connaît les composés beta-dicarbonylés. De tels composés sont disponibles dans le commerce. On cite à titre d'exemple les composés commercialisés sous la marque Rhodiastab® par Rhodia. Ces composés sont des ingrédients de stabilisation qui peuvent être associés à d'autres additifs. Cette association peut être matérialisée et commercialisée sous forme de compositions d'additifs. Les ingrédients de stabilisation et/ou les compositions d'additifs sont utilisés pour la réalisation de compositions stabilisées à base de polymères halogénés de préférence thermoplastiques.

EP-A-1229073 décrit dans les tableaux 1, 2, 3 et 5 des tests de solubilité de différentes béta-dicétones dans différents solvants.

EP-A-0 697 390 divulgue un mélange comprenant une béta-diocétone (le dibenzoyl méthane) en solution dans le xylène.

On cherche toujours à améliorer les ingrédients de stabilisation, les compositions d'additifs, et les compositions stabilisées à base de polymères halogénés, par exemple en termes de facilité de mise en oeuvre et/ou de performance de stabilisation ou de stabilité, et/ou en terme de coûts, et/ou en terme de profile de sécurité de manipulation, et/ou en terme de profile toxicologique ou écotoxicologique, et/ou en terme de perception, à tord ou à raison, de ces profiles par la communauté scientifique, industrielle, ou par le public.

La présente invention répond à au moins un des besoins exprimés ci-dessus en proposant un ingrédient de stabilisation de polymères halogénés comprenant au moins un composé beta-dicarbonylé, **caractérisé en ce que** l'ingrédient est une composition comprenant au moins 90% en poids des produits A et B suivants:
- produit A: composé beta-dicarbonylé, ou mélange de composés beta-dicàrbonylés ou mélange complexe comprenant au moins un composé beta-dicarbonylé, ces mélanges comprenant au moins 5% en poids de composés beta-dicarbonylés, de préférence au moins 10% en poids, de préférence au moins 50% en poids, de préférence au moins 80% en poids, éventuellement au moins 90% en poids, et choisis parmis , et
- produit B: solvant liquide à 20°C dans lequel le produit A est au moins partiellement soluble,
- le produit A étant au moins partiellement solubilisé dans le produit B.

L'invention propose également une composition d'additifs pour polymères halogénés comprenant l'ingrédient de stabilisation, ou l'utilisation de l'ingrédient de stabilisation, dans une composition d'additifs pour polymères halogénés.

L'invention propose également une composition stabilisée à base d'un polymère halogéné, de préférence thermoplastique, comprenant:
- un polymère halogéné,
- l'ingrédient de stabilisation,
- éventuellement des additifs autres que l'ingrédient de stabilisation.

L'invention propose également l'utilisation de t'ingrédient de stabilisation, dans une composition à base d'un polymère halogéné, en tant qu'agent de stabilisation. L'invention propose également l'utilisation de la composition d'additifs, dans une composition à base d'un polymère halogéné, en tant qu'agent de stabilisation.

En outre l'invention peut présenter au moins un des avantages suivants:
- améliorer la stabilisation à taux de produit A constant, on peut parler d'une synergie des produits A et B,
- conserver des performances de stabilisation acceptables tout en utilisant moins de produit A, on peut parler d'une synergie des produits A et B, la stabilisation pouvant être caractérisée par un bas indice de jaune initial, et/ou par une stabilité de coloration,
- proposer un compromis intéressant entre un indice de jaune initial et une stabilité de coloration,
- proposer un compromis coût / performance (par exemple en ce qui concerne les propriétés de stabilisation ci-dessus) intéressant,
- diminuer les quantités de produit A utilisées, ce qui est positif en terme de profile toxicologique ou écotoxicologique, et/ou en terme de perception, à tord ou à raison, de ces profiles par la communauté scientifique, Industrielle, ou par le public,
- améliorer la sécurité en terme de manipulation des produits, ou la perception de cette sécurité,
- faciliter la mise en oeuvre des produits, notamment en proposant un liquide.

On détaille ci-dessous les ingrédients ou les compositions entrant dans la mise en oeuvre de l'invention.

### Produit A

Les composés beta-dicarbonylés et leurs procédés de préparation sont connus de l'homme du métier. De tels composés sont disponibles commercialement. Selon le procédé employé, d'éventuelles étapes de purifications, de récupération et/ou de valorisation de sous produits, et selon, plus généralement, les exigences attendues pour le produit, on peut trouver différents types de produits:
- des composés beta-dicarbonylés purs ou quasi purs, comprenant par exemple au moins 95% en poids d'un produit beta-dicarbonylé, ou même au moins 99% en poids,
- des mélanges de composés beta-dicarbonylés, purs ou quasi purs en composés-beta dicarbonylés, comprenant par exemple au moins 95% de composés beta-dicarbonylés,
- des mélanges complexes, comprenant un composé beta-dicarbonylé ou un mélange des composés beta-dicarbonylés, et des sous-produits ou impuretés n'étant pas des composés beta-dicarbonylés, par exemple des acides gras, comprenant au moins 5% en poids composés beta-dicarbonylés, de préférence au moins 10% en poids, de préférence au moins 50% en poids, de préférence au moins 80% en poids, de généralement moins de 95% en poids. Selon les cas, notamment en liaison avec le taux de composés beta-dicarbonylés, on peut parler de "produits bruts", "de produits résidus lourds" ou de "produits issus des résidus lourds".

Les proportions en poids dans le produit A peuvent notamment être précisément évaluées par Chromatographie en Phase Gazeuse, où les résultats en % sont assimilés à des proportions en poids. Pour la mise en oeuvre de cette analyse, 30 mg de produit sont dilués dans du 1 ml de chloroforme, esterifié (on esterifie plus exactement les acides qui peuvent être compris dans le produit) à l'aide de diazométhane en excès jusqu'à obtention d'une couleur jaune persistante (l'excès est éliminé par la suite), puis ajout de 20 ml de triméthylpentane. De manière plus rapide et moins précise, mais suffisante en première approximation, on peut déterminer la teneur en composés beta-dicarbonylés par potentiométrie (on détermine par potentiométrie la quantité d'acides, puis on la déduit du produit).

Le composé beta-dicarbonylé peut notamment être sous forme complètement organique ou sous forme d'un complexe d'un métal, d'un métal alcalin ou alcalino-terreux, par exemple d'un complexe de zinc ou de calcium.

Le produit A peut être obtenu par une réaction de condensation d'un ester sur une cétone en présence d'un agent alcalin, typiquement une base forte comme un amidure ou un alcoolate.

Plus spécialement, l'ester mis en oeuvre dans la réaction de condensation précitée, correspond à la formule suivante: R¹'COOR²' dans laquelle R¹' représente un radical hydrocarboné, présentant 1 à 30 atomes de carbone, éventuellement interrompu par un ou plusieurs groupements -O-, -CO-O-, -CO- ; R²' représente un radical hydrocarboné comprenant 1 à 4 atomes de carbone.

Plus particulièrement, le radical R¹' représente un radical alkyle, alcényle, linéaire ou ramifié, en C₁-C₃₀, de préférence en C₁-C₂₄ ; un radical aryle en C₆-C₃₀, substitué ou non par au moins un radical alkyle en C₁-C₁₀, alcoxy en C₁-C₁₀, un atome d'halogène et/ou un atome de silicium ; un radical cycloaliphatique en C₃-C₁₄. Ledit radical peut éventuellement comporter des liaisons doubles carbone-carbone et peut éventuellement être interrompu par un ou plusieurs groupements -O-, -CO-O-, -CO-.

Parmi les radicaux possibles, on peut citer le radical lauryl, myristyl, stéaryl, isostéaryl, palmityl, béhényl, lignocérique, oléyl, palmitoléyl, linoléyl, linolényl, benzyl éventuellement porteur d'un ou plusieurs substituant alkyl, alcoxy.

Pour ce qui concerne le radical R2', celui-ci représente de préférence un radical alkyle en C₁-C₄. Il est à noter que, selon la nature de l'agent alcalin, il peut être intéressant de choisir le radical R²' de telle sorte que l'alcool correspondant soit volatil dans les conditions de la réaction de condensation. De manière particulièrement avantageuse, ledit radical est le radical méthyle.

Il est à noter que l'ester peut se trouver sous sa forme simple, ou sous une forme partiellement ou totalement condensée. Selon un mode de réalisation, si l'ester possède un hydrogène en position alpha du groupement ester, il peut alors être employé partiellement ou totalement sous la forme d'un β-cétoester. Dans ce cas, dans la formule de l'ester donnée avant, on peut remplacer le radical R¹' par R¹'COR'¹, dans la formule de l'ester donnée ci-dessus. Cette formule devient dans ce cas R¹'COR'¹COOR²', R^{1'} ayant la même signification que ci-dessus, R'¹ pareillement, à l'exception du fait qu'il s'agit d'un radical divalent.

La cétone mise en oeuvre dans la réaction de condensation correspond plus particulièrement à la formule suivante : R³COCH₂R⁴ dans laquelle R³ représente un radical hydrocarboné, présentant 1 à 30 atomes de carbone, éventuellement interrompu par un ou plusieurs groupements -O-, -CO-O-, -CO- ; R⁴ représente un atome d'hydrogène ou un radical hydrocarboné comprenant au plus 4 atomes de carbone.

De préférence, le radical R³ représente un radical alkyle, alcényle, linéaire ou ramifié, en C₁-C₃₀, de préférence en C₁-C₂₄ ; un radical aryle en C₆-C₃₀, substitué ou non par au moins un radical alkyle en C₁-C₁₀, alcoxy en C₁-C₁₀, un atome d'halogène et/ou un atome de silicium ; un radical cycloaliphatique en C₃-C₁₄. Ledit radical peut éventuellement comporter des liaisons doubles carbone-carbone et peut éventuellement être interrompu par un ou plusieurs groupements -O-, -CO-O-, -CO-.

Parmi les radicaux possibles, on peut citer le radical lauryl, myristyl, stéaryl, isostéaryl, palmityl, béhényl, lignocérique, oléyl, palmitoléyl, linoléyl, linolényl, benzyl éventuellement porteur d'un ou plusieurs substituant alkyl, alcoxy.

Pour ce qui concerne le radical R⁴, celui-ci représente de préférence un radical alkyle en C₁-C₄. De manière particulièrement avantageuse, ledit radical est le radical méthyle.

Habituellement, le rapport molaire de la cétone à l'ester se situe dans la gamme de 2/3 à 1/1. De préférence, l'ester est présent dans un excès jusqu'à 30 % en mole par rapport à la cétone, et très préférentiellement, dans un excès de 5 à 20 % en mole.

Le composé beta-dicarbonylé peut ainsi être de formule R¹'COCH₂COR³, dans laquelle R¹' et R³ ont les significations détaillées auparavant. Il est à noter qu'il n'est pas exclu que R¹' et R³ soient reliés entre eux de manière à ce que le composé beta-dicarbonylé se trouve sous la forme d'un cycle.

Selon un mode de réalisation de l'invention, la réaction est effectuée en présence d'un solvant. Ce dernier est choisi parmi les composés inertes dans les conditions de réaction.

Classiquement, il est choisi parmi les hydrocarbures aromatiques, aliphatiques ou cycliques ; les fractions hydrocarbonées, les éthers.

De préférence, le solvant est choisi parmi les alkylbenzènes, comme le toluène, les dialkylbenzènes et les trialkylbenzènes, mais aussi l'éther isopropylique ; le toluène, le xylène, étant préférés.

Par ailleurs, la réaction de condensation est réalisée en présence d'un agent basique (ou "agent alcalin"). Plus spécialement, ledit agent est choisi parmi les amidures, les hydrures, les alcoolates comprenant 1 à 4 atomes de carbone.

Habituellement, le nombre de moles d'agent basique présent durant la réaction est tel que le rapport molaire agent basique / somme des moles d'ester et de cétone, est voisin de 1.

Selon un premier mode de réalisation, la réaction de condensation est effectuée en présence d'un hydrure de sodium, ou de préférence d'amidure de sodium.

Du fait de la présence d'amidure de sodium il est préférable d'effectuer la réaction sous atmosphère inerte, de préférence sous balayage d'azote.

En outre, la réaction s'effectue à une température située de préférence entre 30 et 60°C.

Selon un deuxième mode de réalisation de l'invention, l'agent basique est un alcoolate de sodium, dont l'alcool correspondant est volatile dans les conditions de la réaction de condensation. De préférence l'alcoolate est le méthylate de sodium.

En outre, dans ce cas, le solvant est choisi parmi ceux présentant une température d'ébullition supérieure d'au moins 20 °C à la température de la réaction.

De préférence, la réaction est réalisée à reflux du solvant.

Quelle que soit la variante retenue, la réaction est de préférence réalisée en introduisant la cétone dans l'ester comprenant l'agent basique, et le cas échéant le solvant.

Selon la nature de l'agent basique, il est judicieux de prévoir des moyens de récupération, soit le l'ammoniac produit, soit de l'alcool produit.

Dans le cas particulier où ledit agent est un alcoolate, l'élimination de l'alcool produit au fur et à mesure de son apparition dans le mélange réactionnel représente une caractéristique très avantageuse du procédé et permet entre autres d'augmenter le rendement en composé β-dicarbonylé souhaité.

En fin de réaction, quelle que soit, là encore, la variante retenue, le milieu réactionnel est de préférence acidifié.

Dans ce but, on introduit le mélange réactionnel dans une solution aqueuse d'un acide dont les préférés sont l'acide acétique, l'acide chlorhydrique et l'acide sulfurique. On règle le pH de la couche aqueuse à une valeur comprise de préférence entre 1 et 3.

Après au moins un lavage à l'eau, on élimine le solvant par tout moyen convenable, par exemple par évaporation et l'on obtient un produit brut.

Ce produit brut comprend le composé beta-dicarbonylé souhaité (R¹'COCH₂COR³), ainsi que des homologues symétriques (R¹'COCH₂COR¹', R³COCH₂COR³), de même que des sous-produits. Il peut donc s'agir d'un "mélange complexe" comme expliqué ci-dessus.

Il est à noter que la composition exacte des sous-produits est très complexe à évaluer. Ils peuvent notamment provenir de réactions de crotonisation des composés β-dicarbonylés entre eux, de l'apparition d'espèces comprenant des fonctions amides si l'agent basique comprend de l'azote.

Selon une première possibilité, le produit A comprend un mélange correspondant au produit brut issu de la réaction de condensation.

Dans le cas de cette possibilité, la teneur en composés beta-dicarbonylés est en générale comprise entre 40 et 95% en poids, de préférence entre 40 et 80 % en poids, et la teneur en sous-produits de 5 à 60 % en poids, de préférence de 20 à 60 % en poids.

Le produit A selon cette possibilité peut se présenter sous la forme d'un solide divisé, qui selon les méthodes de mise en forme employées, peut se trouver sous une forme de poudre ou encore d'écailles.

Parmi les méthodes de mise en forme de la composition, on peut citer sans intention de se limiter, l'écaillage, la précipitation dans un solvant, le broyage cryogénique, la pulvérisation/séchage dans un courant gazeux.

L'écaillage permet d'éliminer le solvant du mélange réactionnel par passage de la solution sur un tambour tournant refroidi en permanence. Le produit solidifié à la surface du tambour est récupéré par une racle sous forme d'écailles.

La technique de précipitation dans un solvant consiste par exemple à couler le produit brut sous forme fondue dans un composé à température ambiante, qui n'est pas un bon solvant à cette température, de ce produit brut, comme par exemple l'éthanol ou le méthanol, et on sépare le précipité formé.

Pour ce qui concerne le broyage cryogénique, on procède en général en introduisant dans un broyeur, de l'azote liquide ou tout autre d'autre gaz liquide inerte tel que le CO₂, et le produit brut réactionnel sous forme de morceaux de quelques millimètres à quelques centimètres obtenus par broyage grossier ou bien par la technique d'écaillage.

Enfin, la méthode de pulvérisation / séchage consiste à pulvériser le produit brut réactionnel à l'état fondu à travers un flux de gaz froid inerte introduit à contre-courant ou co-courant.

Selon une deuxième possibilité, le produit A comprend un mélange correspondant au produit récupéré lors d'une étape de purification et après séparation d'avec le composé beta-dicarbonylé.

Selon cette variante, le produit brut est recristallisé dans un solvant approprié, par exemple un alcool comme l'éthanol. Le composé beta-dicarbonylé purifié est séparé, notamment par filtration, d'une solution comprenant le solvant et un mélange de sous-produits et de composés beta-dicarbonylés. La solution est ensuite traitée de manière à éliminer le solvant de cristallisation, par exemple par évaporation. On récupère ainsi le produit A selon cette deuxième possibilité.

Conformément à cette possibilité, la teneur en composés beta-dicarbonylés est en générale comprise entre 5 et moins de 40 % en poids, et une teneur en sous-produits comprise entre de 60% à 95% en poids.

Le produit A selon cette deuxième possibilité se peut se trouver sous une forme solide et/ou pâteuse.

Le composé beta-dicarbonylé peut notamment être:
- le 5-méthyl-1-phenylhaxane-1,3-dione
- l'octanoyl benzoyl methane,
- l'heptanoyl benzoyl methane,
- le stearoyl benzoyl methane,
- le dibenzoyl methane,
- l'acetylacetonate de calcium ou de zinc.

On ne sortirait pas de l'invention, en mettant en oeuvre, à titre de produit A, un mélange ou une association de plusieurs produits qui pourraient convenir à titre de produit A. Dans ce cas toutes les valeurs données quant aux quantités de produit A, et aux composés beta-dicarbonylés qu'ils comprennent, se rapporteront au mélange ou à l'association.

Des produits pouvant être utilisés sont notamment les suivants:
- les produits à base de 5-méthyl-1-phenylhaxane-1,3-dione, comprenant de préférence comme composé beta-dicarbonylé majoritaire en poids (taux le plus élevé de tous les composés beta-dicarbonylés) la 5-méthyl-1-phenylhaxane-1,3-dione, comprenant de préférence au moins 50% en poids de produits beta-dicarbonylés, comprenant de préférence au moins 50% en poids, de 5-méthyl-1-phenylhaxane-1,3-dione, avantageusement au moins 80% en poids, plus avantageusement au moins 95% en poids de 5-méthyl-1-phenylhaxane-1,3-dione.
- les produits à base d'octanoyl benzoyl methane ou d'heptanoyl benzoyl methane, comprenant de préférence comme composé beta-dicarbonylé majoritaire en poids (taux le plus élevé de tous les composés beta-dicarbonylés) l'octanoyl benzoyl methane ou l'heptanoyl benzoyl methane, comprenant de préférence au moins 50% en poids de produits beta-dicarbonylés, comprenant de préférence au moins 50% en poids, de d'octanoyl benzoyl methane ou d'heptanoyl benzoyl, avantageusement au moins 80% en poids, plus avantageusement au moins 95% en poids d'octanoyl benzoyl methane ou d'heptanoyl benzoyl methane. De tels produits sont par exemple commercialisés par Rhodia sous la dénomination Rhodiastab® 92.
- les produits à base de stearoyl benzoyl methane, comprenant de préférence comme composé beta-dicarbonylé majoritaire en poids (taux le plus élevé de tous les composés beta-dicarbonylés) le stearoyl benzoyl methane, comprenant de préférence au moins 50% en poids de produits beta-dicarbonylés, comprenant de préférence au moins 50% en poids, de stearoyl benzoyl méthane, avantageusement au moins 80% en poids, plus avantageusement au moins 95% en poids de stearoyl benzoyl methane. De tels produits sont par exemple commercialisés par Rhodia sous la dénomination Rhodiastab® 50 ou Rhodiastab® 55P ou Rhodiastab® 55E.

- les produits à base de dibenzoyl méthane, comprenant de préférence comme composé beta-dicarbonylé majoritaire en poids (taux le plus élevé de tous les composés beta-dicarbonylés) le dibenzoyl méthane, comprenant de préférence au moins 50% en poids de produits beta-dicarbonylés, comprenant de préférence au moins 50% en poids, de dibenzoyl methane, avantageusement au moins 80% en poids, plus avantageusement au moins 95% en poids de dibenzoyl méthane. De tels produits sont par exemple commercialisés par Rhodia sous la dénomination Rhodiastab® 83.
- les produits à base de complexes d'acétylacétonate, par exemple à base de complexes de métaux, de préférence à base de complexe de métaux alcalins ou alcalino-terreux, par exemple à base de d'acétylacétonate de zinc ou de calcium, comprenant avantageusement au moins 80% en poids, de préférence au moins 95% en poids de d'acétylacétonate de zinc ou de calcium. De tels produits sont par exemple commercialisés par Rhodia sous la dénomination Rhodiastab® X7.

### Produit B

Le produit B est un solvant liquide à 20°C dans lequel le produit A est au moins partiellement soluble.

Le produit B est choisi parmi les composés suivants: les diesters de formule R¹OOC-(CH₂)ₙ-COOR², dans laquelle R¹ et R², identiques ou différents, dont des groupes alkyles linéaires ou branchés, aryles, alkaryles, ou arylalkyles, en C₁-C₁₀ de préférence en C₁-C₈, et n est un nombre moyen de 2 à 4,

Le diester peut être un mélange de diesters d'adipate (n=4), de diesters de glutarate (n=3), et de diesters de succinate (n=2).

Avantageusement, le produit B est un diester choisi parmi
- le diméthyle adipate,
- un mélange de diméthyle adipate (par exemple de 9 à 17 parties en poids, par Chromatographie en Phase Gazeuse), diméthyle glutarate (par exemple de 59 à 67 parties en poids), et de diméthyle succinate (par exemple de 20 à 28 parties en poids), par exemple commercialisé par Rhodia sous la dénomination Rhodiasolv® RPDE,
- le diisobutyle adipate,
- un mélange de diisobutyle adipate (par exemple de 9 à 17 parties en poids, par Chromatographie en Phase Gazeuse), de diisobutyle glutarate (par exemple de 59 à 67 parties en poids), et de diisobutyle succinate (par exemple de 20 à 28 parties en poids), par exemple commercialisé par Rhodia sous la dénomination Rhodiasolv® DIB.

### Ingrédient de stabilisation

L'ingrédient de stabilisation de l'invention comprend le produit A et le produit B. Le produit A est au moins partiellement solubilisé dans le produit B. Avantageusement au moins 50% du produit A est solubilisé, de préférence au moins 75%, de préférence au moins 95%, de préférence 100%. Par solubilisé, on entend que le produit A ne forme pas de séparation macroscopique de phases. Par partiellement solubilisé, on entend qu'il se forme une séparation de phases (par exemple par sédimentation, décantation) qu'il est possible d'isoler (par exemple par filtration ou utilisation d'une ampoule à décanter), la phase comprenant le produit B comprenant également une partie du produit A, sous forme solubilisée.

La nature, et les proportions de produits A et B peuvent être choisis à cet effet.

L'ingrédient de stabilisation peut être préparé par tout procédé approprié pour préparer une solution, par exemple par simple mélange, avec éventuellement agitation et/ou chauffage.

Selon un mode de réalisation avantageux:
- le rapport pondéral entre le produit A et le produit B est compris entre 90/10 et 10/90,
- l'ingrédient comprend au moins 1% en poids, de préférence au moins 10% en poids, de composés beta-dicarbonylés. L'ingrédient peut comprendre moins de 90% en poids de composés beta-dicarbonylés, de avantageusement moins de 50%.

Avantageusement l'ingrédient de stabilisation est tel qu'on observe une synergie de stabilisation lors de l'introduction de 0,2 parties en poids de l'ingrédient pour 100 parties en poids de PVC comprenant au moins 25 parties en poids d'un plastifiant. Les produits A et B (leur nature) et leurs proportions sont avantageusement choisis à cet effet.

Selon un mode de réalisation particulier:
- le produit A est un produit à base de dibenzoyl methane,
- le produit B est le diméthyle adipate, ou un mélange de diméthyle adipate, diméthyle glutarate, et de diméthyle succinate, et
- le rapport en poids entre le produit A et le produit B est compris entre 5/95 et 50/50, de préférence entre 10/90 et 45/55. de préférence entre 15/98 et 35/65.

Selon un autre mode de réalisation particulier:
- le produit A est à base de 5-méthyl-1-phenylhaxane-1,3-dione,
- le produit B est le diméthyle adipate, ou un mélange de diméthyle adipate, diméthyle glutarate, et de diméthyle succinate, et
- le rapport en poids entre le produit A et le produit B est compris entre 75/25 et 10/90, de préférence entre 60/40 et 20/80.

Selon un autre mode de réalisation particulier:
- le produit A est à base-de strearoyl bezoyl méthane,
- le produit B est le diméthyle adipate, ou un mélange de diméthyle adipate, diméthyle glutarate, et de diméthyle succinate, et
- le rapport en poids entre le produit A et le produit B est compris entre 75/25 et 10/90, de préférence entre 60/40 et 20/80.

### Composition d'additifs

La composition d'additifs selon invention comprend l'ingrédient de stabilisation, et d'autres additifs. De telles compositions d'additifs constituent souvent des produits intermédiaires, qui peuvent être commercialisés, entre l'ingrédient de stabilisation et sa destination finale dans une composition comprenant un polymère halogéné. Il s'agit de produits comprenant généralement à titre d'additifs, des composés visant à compléter ou améliorer la stabilisation, à faciliter la mise en oeuvre des procédés de transformation ou d'additivation des polymères, ou à modifier des propriétés des compostions comprenant le polymère, comme les propriétés mécaniques ou l'aspect (transparence, couleur etc), ou même à diminuer le coût total de la composition comprenant le polymère.

La composition d'additifs est avantageusement liquide. Elle peut comprendre de préférence de 10 à 90% en poids de l'ingrédient de stabilisation.

L'homme du métier connaît les compositions d'additifs qui peuvent être utiles. Ainsi les autres additifs peuvent être choisis parmi:
- les stabilisants autres que les composés beta-dicarbonylés du produit A,
- les lubrifiants,
- les plastifiants,
- les charges, par exemple des composés choisis parmi le talc, le carbonate de calcium, le kaolin, la chaux, le dioxyde de titane, seuls ou en mélanges,
- éventuellement du PVC, si la composition est un mélange maître comprenant moins de 50% an poids de PVC,
- leurs mélanges ou associations.

### Autres stabilisants

La composition d'additifs peut éventuellement comprendre au moins un additif choisi parmi des composés comprenant un métal choisi dans les colonnes IIA, IIB, IVB de la classification périodique des éléments (parue dans le supplément au Bulletin de la Société Chimique de France, no. 1, janvier 1966), ou bien encore un additif choisi parmi des composés du type des uracyles.

Concernant les composés comprenant un métal, ledit métal est plus particulièrement choisi parmi le calcium, le baryum, le magnésium, le strontium, le zinc, l'étain ou encore le plomb.

Il est à noter que des associations de plusieurs de ces composés stabilisants sont envisageables comme par exemple un mélange de composés stabilisants à base de calcium et de zinc.

En ce qui concerne les additifs comprenant au moins l'un des éléments des colonnes IIB et IIA, on peut citer tout particulièrement les sels (savons) métalliques d'acides organiques, tels que les acides carboxyliques aliphatiques, aromatiques ou les acides gras, ou encore les phénolates ou les alcoolates aromatiques.

Les plus couramment utilisés sont par exemple les sels des éléments IIA ou IIB des acides maléique, acétique, diacétique, propionique, hexanoïque, éthyl-2 hexanoïque, décanoïque, undécanoïque, laurique, myristique, palmitique, stéarique, oléïque, ricinoléïque, béhénique (docosanoïque), hydroxystéarique, hydroxy-undécanoïque, benzoïque, phénylacétique, paratertiobutylbenzoïque et salicylique, les phénolates, les alcoolates dérivés du naphtol ou des phénols substitués par un ou plusieurs radicaux alkyle, tels que les nonylphénols.

De préférence, l'additif est choisi parmi les sels de métal alcalino-terreux de propionate, oléate, stéarate, laurate, ricinoléate, docosanoate, benzoate, paratertiobutylbenzoate, salicylate, maléate, mono-éthyl-2 hexyle, nonylphénates, naphténate.

En ce qui concerne les composés comprenant du plomb, on peut citer notamment ceux décrits dans ENCYCLOPEDIA of PVC de Leonard I. NASS (1976) page 299-303.

Ce sont des composés très divers dont les plus couramment utilisés sont le carbonate dibasique de plomb, le sulfate tribasique de plomb, le sulfate tétrabasique de plomb, le phosphite dibasique de plomb, l'orthosilicate de plomb, le silicate basique de plomb, le coprécipitat de silicate et de sulfate de plomb, le chlorosilicate basique de plomb, le coprécipitat de gel de silice et d'orthosilicate de plomb, le phatalate dibasique de plomb, le stéarate neutre de plomb, le stéarate dibasique de plomb, le fumarate tétrabasique de plomb, le maléate dibasique de plomb, l'éthyl-2 hexanoate de plomb, le laurate de plomb.

Pour ce qui a trait aux composés à base d'étain, on peut notamment se reporter à l'ouvrage "Plastics Additives Handbook" de Gachter/Multer (1985) pages 204-210 ou dans "Encyclopedia of PVC" de Leonard I. Nass (1976) pages 313-325.

Ce sont plus particulièrement des carboxylates de mono- ou di-alkylétain et des mercaptides de mono- ou di-alkylétain.

Parmi ces composés les plus couramment utilisés sont les dérivés de di-n-méthylétain, de di-n-butylétain ou de di-n-octylétain tels que par exemple le dilaurate de dibutylétain,le maléate de dibutylétain, le laurate-maléate de dibutylétain, le bis(maléate de mono-C₄-C₈-alkyle) de dibutylétain, le bis(lauryl-mercaptide) de dibutylétain, le S-S' (mercaptoacétate d'isooctyle) dibutylétain, le β-mercapto propionate de dibutylétain, le maléate de di-n-octylétain polymère, le bis-S-S'(mercaptoacétate d'isooctyle)di-n-octylétain, le β-mercapto-propionate de di-n-octylétain. Les dérivés monoalkylés des composés cités ci-dessus sont aussi convenables.

Les additifs choisis parmi les uracyles sont plus particulièrement des dérivés de type 6-amino-uracyles ou 6-amino-thiouracyles, portant des substituants aux positions 1 et 3. Lesdits substituants en positions 1 et 3 sont plus spécialement des radicaux alkyle en C₁-C₁₂, alcényle en C₃-C₆, cycloalkyle en C₅-C₈, alkylphényle en C₇-C₉ ; lesdits radicaux étant éventuellement substitués par un à trois groupements alkyle ou alcoxy en C₁-C₄, cycloalkyle en C₅-C₈, radical hydroxyle ou atome de chlore. L'utilisation de ce type d'additif a notamment été décrit dans EP 1 046 668, US 4 656 209.

### Lubrifiants ou autres

La composition d'additifs peut comprendre au moins un additif choisi parmi les cires ; les mono-alcools ; les polyols ; les composé comprenant une ou plusieurs fonctions époxydes ; les acides gras saturés ou non ainsi que leurs esters ; les isocyanurates ; les huiles ou les résines polysiloxaniques ou encore les silanes ; seuls ou en mélange.

Parmi les cires utilisables, on peut mentionner notamment les cires montanates, les cires de polyéthylène ou leur dérivés oxydés, ainsi que les paraffines.

En ce qui concerne les monoalcools, ces derniers sont avantageusement des alcools aliphatiques, saturés ou non, comprenant 12 à 30 atomes de carbone. A titre d'exemples, on peut citer sans intention de s'y limiter les alcools laurique, myristique, stéarique, isostéarique, cétylique, behénique, lauroléique, oléique, érucique, linoléique, seuls ou en mélange.

Les polyols peuvent comprennent de préférence de 2 à 32 atomes de carbone, présentant 2 à 9 groupements hydroxyles ; les fonctions hydroxyles pouvant être portées par des atomes, de préférence des atomes de carbone, vicinaux ou non.

Parmi ces composés on peut mentionner les diols tels que le propylène glycol, butylène glycol, le butanediol, pentanediol, l'hexanediol, le dodécanediol, le néopentylglycol, les polyols tels que le triméthylolpropane, le pentaérythritol, le dipentaérythritol, le tripentaérythritol, le xylitol, le mannitol, le sorbitol, la glycérine, les mélanges d'oligomères de la glycérine présentant un degré de polymérisation de 2 à 10, l'alcool hydroxystéarique, l'alcool ricinoléique.

Une autre famille de polyols pouvant être convenablement mise en oeuvre, est constituée par les alcools polyvinyliques éventuellement partiellement acétylés.

Les composés présentant une ou plusieurs fonctions époxydes sont de préférence choisis parmi les huiles végétales époxydées telles que l'huile de soja époxydée, l'huile de ricin époxydée, l'huile de lin époxydée, l'huile de poisson époxydée, de même que des esters d'acides gras époxydés.

Parmi les acides gras, qui sont plus particulièrement des acides carboxyliques comprenant 12 à 30 atomes de carbone, saturés ou non, linéaires ou ramifiés, et comprenant éventuellement un ou plusieurs groupes hydroxyle, on peut mentionner, entre autres, les acides stéarique, isostéarique, laurique, myristique, palmitique, oléïque, ricinoléïque, béhénique (docosanoïque), l'acide linoléique, l'acide linolénique, l'acide ricinoléique, l'acide hydroxystéarique, ou tout autre acide provenant des glycérides ou triglycérides, naturels ou non, conviennent à la mise en oeuvre de l'invention. Les acides peuvent être mis en oeuvre, seuls ou en mélange.

En ce qui concerne les esters des acides précités, conviennent notamment les esters obtenus à partir de monoalcools comprenant 1 à 30 atomes de carbone, ou les mono- ou polyesters obtenus à partir de polyols, comme par exemple des dérivés du glycérol, des alkylènes glycols comme le propylène glycol.

On peut de même utiliser des isocyanurate, notamment présentant un ou plsuieurs groupements hydroxyles, tels que par exemple le tris (2-hydroxyéthyl) isocyanurate.

Parmi les huiles ou les résines polysiloxaniques, on peut citer entre autres les huiles polydialkylsiloxaniques ou les huiles polyhydrogénoalkylsiloxaniques, pour lesquelles le radical alkyle comprend 1 à 3 atomes de carbone, et de préférence correspond à un radical méthyle.

Ces huiles correspondent à la formule générale suivante :
YO-[(R)Si(R)-O]ₓ-Y, formule dans laquelle R, identiques ou différents, représentent un radical alkyle comprenant 1 à 3 atomes de carbone, et de préférence un méthyle, ou un atome d'hydrogène à la condition que seulement l'un des deux radicaux soit un hydrogène, Y représente un atome d'hydrogène ou (R')₃Si, avec R', identiques ou différents, représentant un radical alkyle comprenant 1 à 3 atomes de carbone, de préférence le méthyle. Le coefficient x varie dans un large domaine, mais plus particulièrement il est compris entre 5 et 300.

Conviennent aussi les huiles polyméthylsiloxanes fonctionnalisées comme par exemple les huiles γ-hydroxypropylénées.

Enfin, pour ce qui est des résines polysiloxaniques, on emploie tout particulièrement les résines obtenues par l'action d'huiles polyhydrogénosiloxaniques sur des huiles polysiloxaniques portant des groupements vinyles, en présence d'un catalyseur à base de platine.

On peut de même employer des résines polysiloxaniques obtenues par hydrolyse et auto-condensation d'au moins un silane de formule (RO)₃SiF, ou (RO)₂(Me)SiF, dans lesquelles R, identiques ou différents, représentent un radical alkyle comprenant 1 à 4 atomes de carbone, F représente plus particulièrement les radicaux suivants :

- CH=CH₂,

-(CH₂)₃OH, -(CH₂)₃-NH₂,

-(CH₂)₃NHCH₂CH₂NH₂,

-(CH₂)₃O-CO-CH=CH₂,

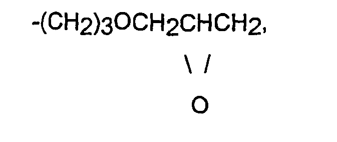

-(CH₂)₃O-CO-(CH₃)CH=CH₂.

On peut utiliser aussi les silanes précités.

### Plastifiants

Parmi les plastifiants utilisables, conviennent les phtalates d'alkyle, comme le phtalate de di(éthyl-2-hexyle), les esters de diacides linéaires en C₆-C₈, comme les adipates ; les citrates ; les esters de monoacides ou de polyacides benzoïques, comme les benzoates, les trimellitates ; les esters phosphates, les esters sulfonates de phénol ; seuls ou en mélanges.

### Polymère halogéné et compositions à base du Polymère halogéné

L'invention concerne également une composition stabilisée à base d'un polymère halogéné, comprenant:
- un polymère halogéné,
- l'ingrédient de stabilisation,
- éventuellement des additifs autres que l'ingrédient de stabilisation. Les additifs peuvent être choisis parmi ceux mentionnés pour la composition d'additifs.

Le polymère halogéné est de préférence thermoplastique.

Le polymère halogéné est de préférence un polymère chlorés; de préférence le polychlorure de vinyle.

Par polychlorure de vinyle, on entend des compositions dont le polymère est un homopolymère de chlorure de vinyle. L'homopolymère peut être modifié chimiquement par exemple par chloration.

De nombreux copolymères du chlorure de vinyle peuvent également être stabilisés mis en oeuvre. Ce sont en particulier des polymères obtenus par copolymérisation du chlorure de vinyle avec des monomères présentant une liaison éthyléniquement polymérisable, comme par exemple l'acétate de vinyle, le chlorure de vinylidène ; les acides maléique, fumarique ou leurs esters ; les oléfines telles que l'éthylène, le propylène, l'hexène ; les esters acryliques ou méthacryliques ; le styrène ; les éthers vinyliques tels que le vinyldodécyléther.

Habituellement les copolymères contiennent au moins 50 % en poids de motifs de chlorure de vinyle et de préférence au moins 80 % en poids de tels motifs.

Le polychlorure de vinyle, seul ou en mélange avec d'autres polymères, est le polymère chloré le plus largement utilisé dans les formulations stabilisées selon l'invention.

D'une manière générale, tout type de polychlorure de vinyle convient, quel que soit son mode de préparation. Ainsi les polymères obtenus par exemple en mettant en oeuvre des procédés en masse, en suspension, en émulsion peuvent être stabilisés en utilisant la composition selon l'invention, et ceci quelle que soit la viscosité intrinsèque du polymère.

La composition stabilisée peut avantageusement comprendre de 0,01 à 2 parties en poids de l'ingrédient de stabilisation pour 100 parties du polymère. De préférence cette quantité est de 0,05 à 0,5 parties.

La composition stabilisée peut avantageusement comprendre de 0,005 à 1 parties en poids de composés beta-dicarbonylés pour 100 parties du polymère. De préférence cette quantité est de 0,05 à 0,5 parties.

La composition stabilisée peut comprendre des additifs, notamment ceux mentionnés pour la composition d'additifs.

Lorsqu'il est présent, la teneur totale en plastifiant est comprise entre 5 et 200 parties en poids pour 100 parties en poids de polymère halogéné.

La composition stabilisée peut comprendre au moins un additif choisi parmi des composés comprenant un métal choisi dans les colonnes IIA, IIB, IVB de la classification périodique des éléments. S'ils sont présents, la teneur en ces composés varie habituellement entre 0,1 et 4 g pour 100 g de polymère halogéné, de préférence entre 0,3 et 2 g de polymère halogéné.

Si un capteur d'acide est présent dans la composition stabilisée, et de préférence tel est le cas, la teneur totale en ce composé est comprise entre 0,01 et 10 g pour 100 g de polymère halogéné, plus particulièrement, entre 0,05 et 5 g par rapport à la même référence.

La composition stabilisée peut de plus comprendre additif choisi parmi les dihydropyridines, des composés de type uracyle et thiouracyle, comme notamment ceux décrits auparavant, l'acide déhydroacétique. Plus spécialement, concernant les dihydropyridines on peut utiliser celles du type des 2,6-diméthyl 3,5-dicarboxylate 1,4 dihydropyridines, dont les radicaux carboxylates, de formule ROCO -, identiques ou non, sont tels que R représente un radical alkyle, linéaire ou ramifié, en C1-C36 ; un radical cyclique ayant moins de 14 atomes de carbone et portant éventuellement une liaison éthylénique et/ou au moins un substituant alkyle en C1-C22 ; un radical aryle, ayant moins de 14 atomes de carbone et portant éventuellement au moins un substituant alkyle en C1-C22. Si de tels composés sont présents dans la composition stabilisée, leur teneur varie généralement entre 0,005 et 5 g pour 100 g de polymère halogéné, de préférence comprise entre 0,2 et 1,5 g pour 100 g de polymère halogéné.

La composition stabilisée peut de même éventuellement comprendre au moins un additif choisi parmi les mono-alcools et/ou les polyols tels que notamment ceux cités dans le cadre de la description de la composition selon l'invention. Si la composition stabilisée comprend ce type de additif, la teneur totale est avantageusement comprise entre 0,05 et 5 g pour 100 g de polymère halogéné. Plus particulièrement elle est inférieure à 2 g pour 100 g de polymère halogéné.

La composition stabilisée peut aussi comprendre au moins un composé comprenant une ou plusieurs fonctions époxydes. Si ce type de composé est présent dans la composition stabilisée, sa teneur totale est avantageusement comprise entre 0,5 et 10 g pour 100 g de polymère halogéné.

Il n'est pas exclu que la composition stabilisée comprenne au moins un composé choisi parmi les cires ; les acides gras, saturés ou non, ainsi que leurs esters ; les huiles ou les résines polysiloxaniques ou encore les silanes ; seuls ou en mélange. S'il est présent, la teneur totale en ce type de composé varie en général entre 0,05 et 2 g pour 100 g de polymère halogéné.

La composition stabilisée peut de même comprendre des composés du type des phosphites organiques, comme par exemple, les phosphites de trialkyle, d'aryle, de triaryle, de dialkylaryle, ou de diarylalkyle, pour lesquels le terme alkyle désigne des groupements hydrocarbonés de monoalcools ou de polyols en C₈-C₂₂, et le terme aryle désigne des groupements aromatiques de phénol ou de phénol substitué par des groupements alkyles en C₆-C₁₂. On peut de même utiliser des phosphites de calcium, comme par exemple des composés du type Ca(HPO₃).(H₂O) ainsi que des complexes phosphite - hydroxy - aluminium - calcium. La teneur en additif de ce type est habituellement comprise entre 0,1 et 7 g pour 100 g de polymère halogéné, lorsqu'il est employé.

Si la composition stabilisée renferme une ou plusieurs charges, selon l'application finale du polymère et la méthode de mise en forme utilisée, leur teneur totale représente habituellement 2 à 150 g pour 100 g de polymère halogéné. Plus particulièrement, dans le cas de compositions stabilisées destinées à l'obtention de profilés par exemple, la teneur en charge est comprise entre 2 et 8 g pour 100 g de polymère halogéné. Dans le cas de formulations destinées à des applications souples ou semi rigides, du type des câbles par exemple, la teneur en charge est plus particulièrement comprise entre 30 et 150 g pour 100 g de polymère halogéné.

D'autres additifs classiques peuvent compléter la composition stabilisée ou la composition d'additifs, selon l'application à laquelle elle est destinée.

Ainsi, la composition peut comprendre des antioxydants phénoliques, des agents anti-UV tels que les 2-hydroxybenzophénones, les 2-hydroxybenzotrlazoles ou les amines stériquement encombrées, connues habituellement sous le terme Hals.

La teneur en ce type d'additif varie généralement entre 0,05 et 3 g pour 100 g de polymère halogéné, lorsqu'ils sont présents.

En outre, les compositions peuvent aussi comprendre des pigments colorée ou blancs, comme notamment le sulfure de cérium, le dioxyde de titane, notamment sous forme rutile et ayant de préférence subi un traitement de surface.

Il est à noter que la quantité de pigment introduite dans la composition varie dans de larges limites et dépend notamment du pouvoir colorant du pigment et de la coloration finale souhaitée. Cependant, à titre d'exemple et si la composition stabilisée en contient, la quantité de pigment peut varier de 0,1 à 20 g pour 100 g de polymère halogéné, de préférence de 0,5 à 15 g par rapport à la même référence.

La composition stabilisée peut notamment être une composition souple ou semi-rigide comprenant un plastifiant, sous forme de poudre ou granulés destinés à être mis en forme, ou sous forme de produits manufacturés mis en forme. Il peut s'agir de câbles, notamment gaine d'isolation, de raccords injectés, films, bouteilles, revêtements le domaine du bâtiment et des travaux public, notamment revêtements de sols, feuilles.

Il n'est pas exclu que la composition stabilisée soit une composition rigide ne comprenant pas ou comprenant peu de plastifiant, sous forme de poudre ou granulés destinés à être mis en forme, ou sous forme de produits manufacturés mis en forme. Il peut s'agir d'articles profilés, par exemple des cadres de portes ou de fenêtres.

La composition stabilisée selon l'invention peut être préparée et/ou mise en forme par tout moyen connu de l'homme du métier.

On peut notamment mettre en oeuvre une étape d'introduction dans le polymère halogéné fondu, des ingrédients suivants:
- l'ingrédient de stabilisation,
- éventuellement un plastifiant,
- éventuellement d'autres additifs, autres que le plastifiant et le ingrédient de stabilisation,
- l'ingrédient, les autres additifs éventuels, le plastifiant éventuel étant éventuellement introduits sous forme d'une composition d'additifs.

On peut incorporer la composition selon l'invention ainsi que les divers constituants au polymère halogéné, individuellement ou bien après avoir préparé préalablement un mélange de plusieurs de ces constituants.

Les méthodes classiques d'incorporation conviennent parfaitement à l'obtention de la composition stabilisée.

Ainsi, et seulement à titre indicatif, on peut effectuer cette opération dans un mélangeur muni d'un système de pâles et de contre-pales fonctionnant à une vitesse élevée.

Généralement, l'opération de mélange est conduite à une température inférieure à 130°C.

Une fois le mélange réalisé, on effectue une mise en forme de la composition selon les méthodes habituelles dans le domaine comme l'injection, l'extrusion-soufflage, l'extrusion, le calandrage ou encore le moulage par rotation, par enduction.

La température à laquelle est réalisée la mise en forme varie en général de 150 à 220°C.

D'autres détails ou avantages de l'invention pourront apparaître au vu des exemples qui suivent, sans caractère limitatif.

### Exemples

Dans les exemples la lettre C est utilisée pour "comparatif"

### Exemples 1 à 3 ingrédients de stabilisation

On prépare des ingrédients de stabilisation suivants, présentés dans le tableau I. Ces ingrédients sont liquides.

**Tableau I**

| Exemple | 1 | 2 | 3 |
|---|---|---|---|
| Dénomination de l'ingrédient | RH82/RPDE 50/50 | RH92/RPDE 50/50 | RH83/RPDE 20/80 |
| Produit A | XX = 82^{*}, | XX = 92, | XX = 83, |
| (Rhodiastab® XX fournisseur Rhodia), proportion en poids | 50% | 50% | 20% |
| Produit B: | 50% | 50% | 80% |
| Rhodiasolv RPDE, Rhodia. Proportion en poids | | | |

| | | | |
|---|---|---|---|
| ^{*} 5-méthyl-1-phenylhaxane-1,3-dione. | | | |

### Procédure:

On mélange les deus produits, pour obtenir une quantité totale de 15g, pendant 20 minutes sous agitation magnétique, à une température d'environ 80°C.

### Exemples comparatifs 4 à 7: Ingrédients

On se procure de la même manière des ingrédients suivants présentés dans le tableau Il. Ces ingrédients sont liquides (sauf celui de l'exemple 6C).

**Tableau II**

| Exemple | 4C | 5C | 6C | 7C |
|---|---|---|---|---|
| Dénomination de l'ingrédient | RH82 | RH92 | RH83 (solide) | RPDE |
| Produit A | XX = 82^{*}, | XX = 92, | XX = 83, | 0% |
| (Rhodiastab® XX fournisseur Rhodia), proportion en poids | 100% | 100% | 100% | |
| Produit B: | 0% | 0% | 0% | 100% |
| Rhodiasolv RPDE, Rhodia. Proportion en poids | | | | |

| | | | | |
|---|---|---|---|---|
| ^{*} 5-méthyl-1-phenylhaxane-1,3-dione. | | | | |

### Exemples 8 à 16: Compositions à base de PVC

On réalise des compostions à base de PVC, présentées sur le tableau IV, comprenant les ingrédients selon le tableau III.

**Tableau III**

| Nature | Produit | Fournisseur | Quantité (parties en poids) |
|---|---|---|---|
| PVC | Solvin 271 PC | Solvay | 100 |
| Plastifiant | DIDP | Exxon | 25 |
| Additif | Huile de soja | Cognis | 1 |
| (Lubrifiant/stabilisant) | époxidée :Edenol | | |
| | D82H | | |
| Additif | Stéarate de Calcium PSE | CECA/ATO | 0,4 |
| Additif | Stéarate de Zinc ZN70 | CECA/ATO | 0,15 |
| Ingrédient de stabilisation testé | Ingrédients selon les exemples 1 à 7, selon le tableau IV | | |

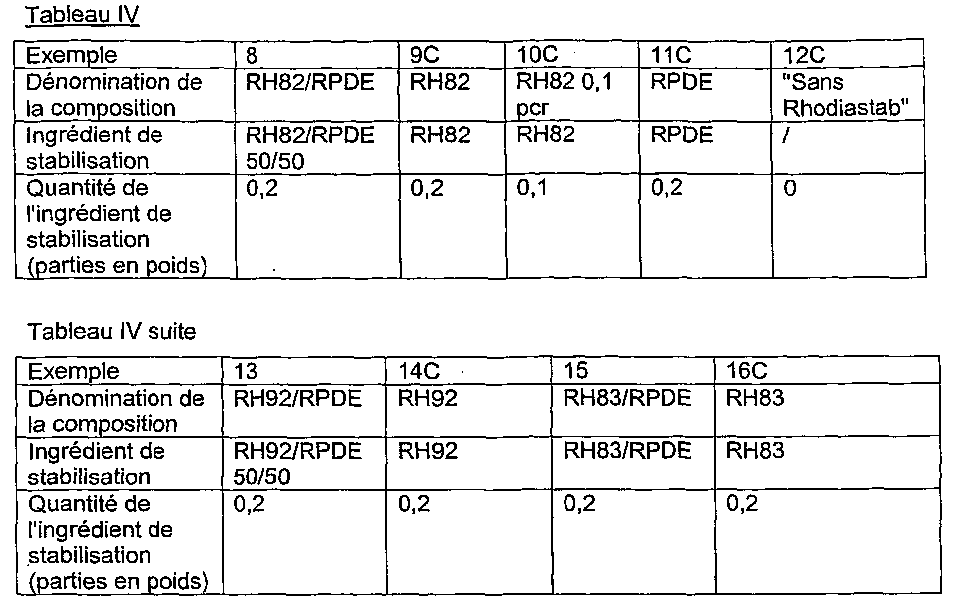

### Procédure de préparation des compositions:

Tous les ingrédients excepté l'ingrédient de stabilisation sont mélangés à 2400 t/min jusqu'à 60°C dans un mélangeur de type Papenmeier. On incorpore ensuite manuellement au mélange l'ingrédient de stabilisation à tester. L'ensemble est transformé sur mélangeur Troester, sans friction, à 190°C. Un prélèvement de PVC est fait à intervalle de temps régulier (après 3 minutes, 6 minutes, 9 minutes, 12 minutes, 15 minutes, 20 minutes), à partir duquel une pastille de PVC est réalisée.

On évalue des propriétés des compositions, selon les tests suivants:

### Coloration initiale: Indice de Jaune et Clarté

L'indice de jaune et la clarté sont mesurés à l'aide d'un colorimètre MINOLTA CR-200 ® et exprimés respectivement par les coordonnées b* et L* dans l'espace couleur L*a*b* (CIELAB)

La coloration initiale de la formulation est donnée par la mesure colorimétrique de la 1ere pastille à 3 minutes.

Plus l'indice de jaune (b*) est bas, et plus la clarté (L*) est haute, meilleure est la stabilisation.

### Stabilité de coloration

La stabilité de coloration (SC) de la formulation correspond au temps où l'indice de jaune a évolué de 2 points.

Cette valeur est mesurée à partir du graphe de l'évolution de l'indice de jaune en fonction du temps (courbe de stabilité thermique).

Plus la valeur SC est élevée, meilleure est la stabilisation.

La variation de couleur des pastilles, en fonction de la durée du test, et en particulier l'indice de Jaune initial (1ere pastille), est directement corrélée à la stabilité thermique du PV. Les tests sont notamment représentatifs de la stabilité dans un outil de préparation de compositions stabilisées et/ou de mise en forme. Les compositions ne restent généralement que peu de temps dans ces outils. La coloration initiale (1ere pastille), plus particulièrement l'indice de Jaune, est donc la propriété la plus importante. Si la composition vient à rester plus longtemps dans les outils, une mauvaise stabilité peut induire une mauvaise qualité du produit (couleur, propriétés mécaniques) et une mise au rebut, et/ou une altération des outils. La stabilité (la coloration) à des temps subséquents vise donc à établir une sécurité opérationnelle. Des temps longs, de l'ordre de 20 minutes, sont des cas extrêmes, qui ne sont en pratique jamais opérés.

### Résultats

Les résultats d'évaluation de chaque ingrédient de stabilisation en terme de Coloration initiale : b, L et de stabilité de coloration sont notés dans le tableau V suivant:

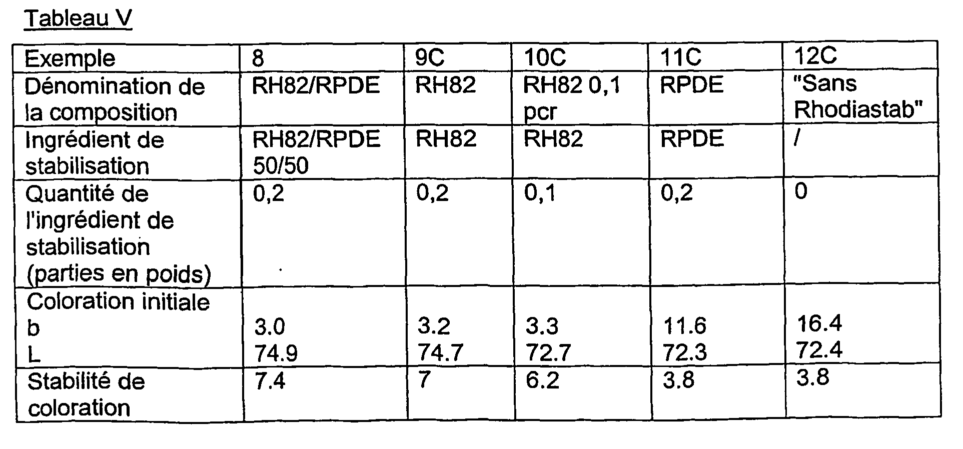

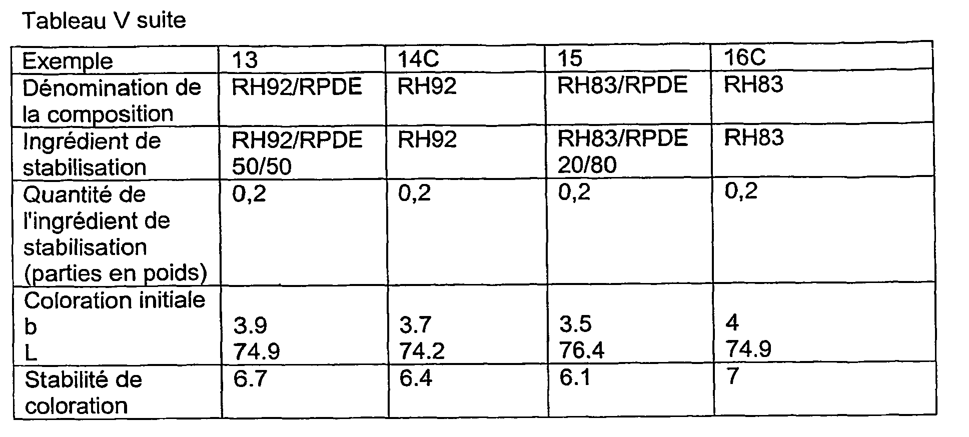

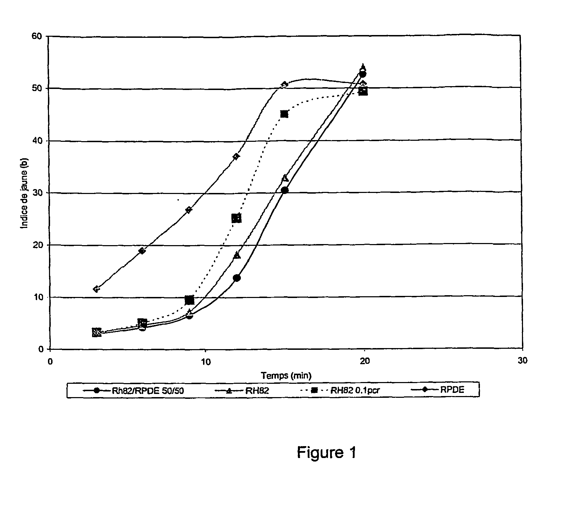

La figure 1 illustre l'évolution de l'indice de jaune dans le temps, pour les exemples 8, 9C, 10C, 11C. Cette figure, ainsi que les valeurs précises de coloration initiale données sur le tableau V, illustre une synergie de stabilisation:
- meilleure stabilité à taux de produit A (composés beta-dicarbonylé) constant (0,1 pcr)
- meilleure stabilité qu'avec chacun des ingrédients.

### Exemples 17 à 20 - Ingrédients de stabilisation

On prépare les ingrédients de stabilisation du tableau VI ci-dessous comme indiqué pour les exemples 1 à 3.

**Tableau VI**

| Exemple | 17 | 18 | 19 | 20 |
|---|---|---|---|---|
| Dénomination de l'ingrédient | RH83/RPDE 20/80 | RH83/Ac. 20/80 | RH83/NMP 20/80 | RH83/DIB 20/80 |
| Produit A | XX = 83, | XX = 83, | XX = 83, | XX = 83 |
| (Rhodiastab® XX fournisseur Rhodia), proportion en poids | 20% | 20% | 20% | 20% |
| Produit B: Nature, | Rhodiasolv | Acétophenone | NMP | Rhodiasolv |
| Proportion en poids | RPDE, | 80% | 80% | DIB, |
| | Rhodia. | | | Rhodia. |
| | 76% | | | 80% |

### Exemples 21 à 24 - Compositions à base de PVC

On prépare et évalue les compositions du tableau VII ci-dessous, comme indiqué pour les exemples 8 à 16.

Cette série d'exemple est réalisée séparément des exemples 8 à 16, à partir de lots d'ingrédients différents. Les résultats ne sont pas directement quantitativement comparables aux résultats des exemples 8 à 16.

**Tableau VII**

| Exemple | 21 | 22 | 23 | 24 |
|---|---|---|---|---|
| Dénomination de | RH83/RPDE | RH83/Ac. | RH83/NMP | RH83/DIB |
| la composition | 20/80 | 20/80 | 20/80 | 20/80 |
| Ingrédient de stabilisation | RH83/RPDE 20/80 | RH83/Ac. 20/80 | RH83/NMP 20/80 | RH83/DIB 20/80 |
| Quantité de | 0,2 | 0,2 | 0,2 | 0,2 |
| l'ingrédient de stabilisation (parties en poids) | vérifier | vérifier | vérifier | vérifier |
| Coloration initiale | | | | |
| b | 4.8 | 5.5 | 5.9 | 5.4 |
| L | 73.3 | 70.8 | 73.1 | 73.2 |
| Stabilité de coloration | 5.7 | 5.6 | 5.2 | 5.7 |

## Revendications

1. Ingrédient de stabilisation de polymères halogénés comprenant au moins un composé beta-dicarbonylé, **caractérisé en ce que** l'ingrédient est une composition comprenant au moins 90% en poids des produits A et B suivants:
- produit A: composé beta-dicarbonylé, ou mélange de composés beta-dicarbonylés ou mélange complexe comprenant au moins un composé beta-dicarbonylé, ces mélanges comprenant au moins 5% en poids de composés beta-dicarbonylés, de préférence au moins 10% en poids, de préférence au moins 50% en poids, de préférence au moins 80% en poids,
- produit B: solvant liquide à 20°C dans lequel le produit A est au moins partiellement soluble, et choisi parmi les diesters de formule R¹OOC-(CH₂)ₙ-COOR², dans laquelle R¹ et R², identiques ou différents, dont des groupes alkyles linéaires ou branchés, aryles, alkaryles, ou arylalkyles, en C₁-C₁₀ de préférence en C₁-C₆, et n est un nombre moyen de 2 à 4, et
- le produit A étant au moins partiellement solubilisé dans le produit B.

2. Ingrédient selon la revendication 1, **caractérisé en ce que**:
- le rapport pondéral entre le produit A et le produit B est compris entre 90/10 et 10/90,
- l'ingrédient comprend au moins 1% en poids, de préférence au moins 10% en poids, de composés beta-dicarbonylés.

3. Ingrédient selon l'une des revendications précédentes, **caractérisé en ce que** les produits A et B et leurs proportions sont tels qu'on observe une synergie de stabilisation lors de l'introduction de 0,2 parties en poids de l'ingrédient pour 100 parties en poids de PVC comprenant au moins 25 parties en poids d'un plastifiant.

4. Ingrédient selon l'une des revendications précédentes, **caractérisé en ce que** le composé dicarbonylé est choisi parmi:
- le 5-méthyl-1-phenylhaxane-1,3-dione
- l'octanoyl benzoyl methane,
- l'heptanoyl benzoyl methane,
- le stearoyl benzoyl methane,
- le dibenzoyl methane,
- l'acetylacetonate de calcium ou de zinc.

5. Ingrédient selon l'une des revendications précédentes, **caractérisé en ce que** le produit B est le diméthyle adipate, ou un mélange de diméthyle adipate, diméthyle glutarate, et de diméthyle succinate, ou le diisobutyle adipate, ou un mélange de diisobutyle adipate, diisobutyle glutarate, et de diisobutyle succinate.

6. Ingrédient selon l'une des revendications précédentes **caractérisé en ce que**
- le produit A est un produit à base de dibenzoyl methane,
- le produit B est le diméthyle adipate, ou un mélange de diméthyle adipate, diméthyle glutarate, et de diméthyle succinate, et
- le rapport entre le produit A et le produit B est compris entre 50/50 et 5/95.

7. Ingrédient selon l'une des revendications 1 à 5 **caractérisé en ce que**
- le produit A est à base de 5-méthyl-1-phenylhaxane-1,3-dione,
- le produit B est le diméthyle adipate, ou un mélange de diméthyle adipate, diméthyle glutarate, et de diméthyle succinate, et
- le rapport entre le produit A et le produit B est compris entre 75/25 et 10/90, de préférence entre 60/40 et 20/80.

8. Ingrédient selon l'une des revendications 1 à 5 **caractérisé en ce que**
- le produit A est à base de strearoyl bezoyl methane,
- le produit B est le diméthyle adipate, ou un mélange de diméthyle adipate, diméthyle glutarate, et de diméthyle succinate, et
- le rapport entre le produit A et le produit B est compris entre 75/25 et 10/90, de préférence entre 60/40 et 20/80.

9. Composition d'additifs pour polymères halogénés comprenant l'ingrédient de stabilisation selon l'une des revendications 1 à 8, et d'autres additifs.

10. Composition d'additifs selon la revendication 9, **caractérisée en ce que** les autres additifs sont choisis parmi:
- les stabilisants autres que les composés beta-dicarbonylés du produit A,
- les lubrifiants,
- les plastifiants,
- les charges,
- éventuellement du PVC, si la composition étant un mélange maître comprenant moins de 50% an poids de PVC,
- leurs mélanges ou associations.

11. Composition stabilisée à base d'un polymère halogéné thermoplastique, comprenant:
- un polymère halogéné, de préférence thermoplastique,
- l'ingrédient de stabilisation selon l'une des revendications 1 à 8,
- éventuellement des additifs autres que l'ingrédient de stabilisation selon l'une des revendications 1 à 8.

12. Composition stabilisée selon la revendication 11, **caractérisée en ce que** le polymère halogéné est le polychlorure de vinyle.

13. Composition stabilisée selon l'une des revendications 11 ou 12, **caractérisée en ce que** qu'il s'agit d'une composition souple ou semi-rigide comprenant un plastifiant, sous forme de poudre ou granulés destinés à être mis en forme, ou sous forme de produits manufacturés mis en forme.

14. Procédé de préparation d'une composition stabilisée selon l'une des revendications 11 à 13, comprenant une étape d'introduction dans le polymère halogéné fondu, des ingrédients suivants:
- l'ingrédient selon l'une des revendications 1 à 8,
- éventuellement un plastifiant,
- éventuellement d'autres additifs, autres que le plastifiant et le l'ingrédient selon l'une des revendications 1 à 8,
- l'ingrédient, les autres additifs éventuels, le plastifiant éventuel étant éventuellement introduits sous forme d'une composition selon l'une des revendications 9 ou 10.

## Claims

1. Stabilizing ingredient for halogenated polymers comprising at least one β-dicarbonyl compound, **characterized in that** the ingredient is a composition comprising at least 90% by weight of the following products A and B:
- product A: β-dicarbonyl compound or mixture of β-dicarbonyl compounds or complex mixture comprising at least one β-dicarbonyl compound, these mixtures comprising at least 5% by weight of β-dicarbonyl compounds, preferably at least 10% by weight, preferably at least 50% by weight, preferably at least 80% by weight,
- product B: solvent which is liquid at 20°C in which the product A is at least partially soluble and which is chosen from diesters of formula R¹OOC-(CH₂)ₙ-COOR², in which R¹ and R², which are identical or different, are linear or branched alkyl, aryl, alkaryl, or arylalkyl groups comprising 1 to 10 carbon atoms, preferably 1 to 6 carbon atoms, and n is a mean number from 2 to 4, and
- the product A being at least partially dissolved in the product B.

2. Ingredient according to Claim 1, **characterized in that**:
- the ratio by weight of the product A to the product B is between 90/10 and 10/90,
- the ingredient comprises at least 1% by weight, preferably at least 10% by weight, of β-dicarbonyl compounds.

3. Ingredient according to either of the preceding claims, **characterized in that** the products A and B and their proportions are such that a stabilizing synergy is observed when 0.2 part by weight of the ingredient is introduced per 100 parts by weight of PVC comprising at least 25 parts by weight of a plasticizer.

4. Ingredient according to one of the preceding claims, **characterized in that** the dicarbonyl compound is chosen from:
- 5-methyl-1-phenylhexane-1,3-dione,
- octanoylbenzoylmethane,
- heptanoylbenzoylmethane,
- stearoylbenzoylmethane,
- dibenzoylmethane,
- calcium or zinc acetylacetonate.

5. Ingredient according to one of the preceding claims, **characterized in that** the product B is dimethyl adipate, or a mixture of dimethyl adipate, dimethyl glutarate and dimethyl succinate, or diisobutyl adipate, or a mixture of diisobutyl adipate, diisobutyl glutarate and diisobutyl succinate.

6. Ingredient according to one of the preceding claims, **characterized in that**:
- the product A is a product based on dibenzoylmethane,
- the product B is dimethyl adipate or a mixture of dimethyl adipate, dimethyl glutarate and dimethyl succinate, and
- the ratio of the product A to the product B is between 50/50 and 5/95.

7. Ingredient according to one of Claims 1 to 5, **characterized in that**:
- the product A is based on 5-methyl-1-phenylhexane-1,3-dione,
- the product B is dimethyl adipate, or a mixture of dimethyl adipate, dimethyl glutarate, and dimethyl succinate, and
- the ratio of the product A to the product B is between 75/25 and 10/90, preferably between 60/40 and 20/80.

8. Ingredient according to one of Claims 1 to 5, **characterized in that**:
- the product A is based on stearoylbenzoylmethane,
- the product B is dimethyl adipate, or a mixture of dimethyl adipate, dimethyl glutarate, and dimethyl succinate, and
- the ratio of the product A to the product B is between 75/25 and 10/90, preferably between 60/40 and 20/80.

9. Additive composition for halogenated polymers comprising the stabilizing ingredient according to one of Claims 1 to 8, and other additives.

10. Additive composition according to Claim 9, **characterized in that** the other additives are chosen from:
- stabilizing agents other than the β-dicarbonyl compounds of the product A,
- lubricating agents,
- plasticizers,
- fillers,
- optionally PVC, if the composition is a masterblend comprising less than 50% by weight of PVC,
- their mixtures or combinations.

11. Stabilized composition based on a thermoplastic halogenated polymer comprising:
- a halogenated polymer, preferably a thermoplastic halogenated polymer,
- the stabilizing ingredient according to one of Claims 1 to 8,
- optionally additives other than the stabilizing ingredient according to one of Claims 1 to 8.

12. Stabilized composition according to Claim 11, **characterized in that** the halogenated polymer is poly(vinyl chloride).

13. Stabilized composition according to either of Claims 11 and 12, **characterized in that** it is a flexible or semirigid composition comprising a plasticizer in the form of a powder or granules intended to be formed or in the form of formed manufactured products.

14. Process for the preparation of a stabilized composition according to one of Claims 11 to 13, comprising a stage of introducing the following ingredients into the molten halogenated polymer:
- the ingredient according to one of Claims 1 to 8,
- optionally a plasticizer,
- optionally other additives, other than the plasticizer and the ingredient according to one of Claims 1 to 8,
- the ingredient, the optional other additives and the optional plasticizer optionally being introduced in the form of a composition according to either of Claims 9 and 10.

## Patentansprüche

1. Stabilisierungbestandteil für halogenhaltige Polymere, enthaltend mindestens eine beta-Dicarbonylverbindung, **dadurch gekennzeichnet, daß** es sich bei dem Bestandteil um eine Zusammensetzung handelt, die mindestens 90 Gew.-% der folgenden Produkte A und B enthält:
- Produkt A: beta-Dicarbonylverbindung oder Gemisch von beta-Dicarbonylverbindungen oder komplexes Gemisch, das mindestens eine beta-Dicarbonylverbindung enthält, wobei diese Gemische mindestens 5 Gew.-% beta-Dicarbonylverbindungen, vorzugsweise mindestens 10 Gew.-%, vorzugsweise mindestens 50 Ges.-%, vorzugsweise mindestens 80 Gew.-%, enthalten,
- Produkt B: bei 20°C flüssiges Lösungsmittel, in dem das Produkt A zumindest teilweise löslich ist und das aus Diestern der Formel R¹OOC-(CH₂)ₙ-COOR², worin R¹ und R² gleich oder verschieden sind und für lineare oder verzweigte Alkyl-, Aryl-, Alkaryl- oder Arylalkylgruppen mit 1 bis 10 Kohlenstoffatomen und vorzugsweise 1-6 Kohlenstoffatomen stehen und n für eine mittlere Zahl von 2 bis 4 steht, ausgewählt ist, und
- wobei das Produkt A zumindest teilweise in dem Produkt B gelöst ist.

2. Bestandteil nach Anspruch 1, **dadurch gekennzeichnet, daß :**
- das Gewichtsverhältnis zwischen Produkt A und Produkt B zwischen 90/10 und 10/90 liegt,
- der Bestandteil mindestens 1 Gew.-%, vorzugsweise mindestens 10 Gew.-%, beta-Dicarbonylverbindungen enthält.

3. Bestandteil nach einem der vorhergehenden Ansprüche, **dadurch gekennzeichnet, daß** die Produkte A und B und ihre Anteile so beschaffen sind, daß man beim Eintragen von 0,2 Gewichtsteilen des Bestandteils pro 100 Gewichtsteile PVC, das mindestens 25 Gewichtsteile eines Weichmachers enthält, eine Stabilisierungssynergie beobachtet.

4. Bestandteil nach einem der vorhergehenden Ansprüche, **dadurch gekennzeichnet, daß** die Dicarbonylverbindung aus
- 5-Methyl-1-phenylhexan-1,3-dion,
- Octanoylbenzoylmethan,
- Heptanoylbenzoylmethan,
- Stearoylbenzoylmethan,
- Dibenzoylmethan,
- Calcium- oder Zinkacetylacetonat
ausgewählt ist.

5. Bestandteil nach einem der vorhergehenden Ansprüche, **dadurch gekennzeichnet, daß** es sich bei dem Produkt B um Adipinsäuredimethylester oder ein Gemisch von Adipinsäuredimethylester, Glutarsäuredimethylester und Bernsteinsäuredimethylester oder Adipinsäurediisobutylester oder ein Gemisch von Adipinsäurediisobutylester, Glutarsäurediisobutylester und Bernsteinsäurediisobutylester handelt.

6. Bestandteil nach einem der vorhergehenden Ansprüche, **dadurch gekennzeichnet, daß**
- es sich bei dem Produkt A um ein Produkt auf Basis von Dibenzoylmethan handelt,
- es sich bei dem Produkt B um Adipinsäuredimethylester oder ein Gemisch von Adipinsäuredimethylester, Glutarsäuredimethylester und Bernsteinsäuredimethylester handelt und
- das Verhältnis von Produkt A und Produkt B zwischen 50/50 und 5/95 liegt.

7. Bestandteil nach einem der Ansprüche 1 bis 5, **dadurch gekennzeichnet, daß**
- es sich bei dem Produkt A um 5-Methyl-1-phenylhexan-1,3-dion handelt,
- es sich bei dem Produkt B um Adipinsäuredimethylester oder ein Gemisch von Adipinsäuredimethylester, Glutarsäuredimethylester und Bernsteinsäuredimethylester handelt und
- das Verhältnis zwischen Produkt A und Produkt B zwischen 75/25 und 10/90, vorzugsweise zwischen 60/40 und 20/80, liegt.

8. Bestandteil nach einem der Ansprüche 1 bis 5, **dadurch gekennzeichnet, daß**
- das Produkt A auf Stearoylbenzoylmethan basiert,
- es sich bei dem Produkt B um Adipinsäuredimethylester oder ein Gemisch von Adipinsäuredimethylester, Glutarsäuredimethylester und Bernsteinsäuredimethylester handelt und
- das Verhältnis zwischen Produkt A und Produkt B zwischen 75/25 und 10/90, vorzugsweise zwischen 60/40 und 20/80, liegt.

9. Additivzusammensetzung für halogenhaltige Polymere, enthaltend den Stabilisierungsbestandteil nach einem der Ansprüche 1 bis 8 und andere Additive.

10. Additivzusammensetzung nach Anspruch 9, **dadurch gekennzeichnet, daß** die anderen Additive aus
- anderen Stabilisatoren als den beta-Dicarbonylverbindungen von Produkt A,
- Gleitmitteln,
- Weichmachern,
- Füllstoffen,
- gegebenenfalls PVC, wenn es sich bei der Zusammensetzung um einen Masterbatch, der weniger als 50 Gew.-% PVC enthält, handelt,
- Mischungen oder Kombinationen davon ausgewählt sind.

11. Stabilisierte Zusammensetzung auf Basis eines thermoplastischen halogenhaltigen Polymers, enthaltend:
- ein vorzugsweise thermoplastisches halogenhaltiges Polymer,
- den Stabilisierungsbestandteil nach einem der Ansprüche 1 bis 8,
- gegebenenfalls andere Additive als den Stabilisierungsbestandteil nach einem der Ansprüche 1 bis 8.

12. Stabilisierte Zusammensetzung nach Anspruch 11, **dadurch gekennzeichnet, daß** es sich bei dem halogenhaltigen Polymer um Polyvinylchlorid handelt.

13. Stabilisierte Zusammensetzung nach einem der Ansprüche 11 oder 12, **dadurch gekennzeichnet, daß** es sich um eine einen Weichmacher enthaltende flexible oder halbsteife Zusammensetzung in Form eines zu formenden Pulvers oder Granulats oder in Form von Formerzeugnissen handelt.

14. Verfahren zur Herstellung einer stabilisierten Zusammensetzung nach einem der Ansprüche 11 bis 13, bei dem man in das schmelzflüssige halogenhaltige Polymer die folgenden Bestandteile einträgt:
- den Bestandteil nach einem der Ansprüche 1 bis 8,
- gegebenenfalls einen Weichmacher,
- gegebenenfalls andere Additive als den Weichmacher und den Bestandteil nach einem der Ansprüche 1 bis 8,
- wobei der Bestandteil, die fakultativen anderen Additive und der fakultative Weichmacher in Form einer Zusammensetzung nach einem der Ansprüche 9 oder 10 eingetragen werden.
